Europäisches Patentamt

European Patent Office

Office européen des brevets

(11) Publication number: **0 218 322**
**A1**

## EUROPEAN PATENT APPLICATION

(21) Application number: 86305625.5

(22) Date of filing: 22.07.86

(51) Int. Cl.4: **B60G 3/28**

(30) Priority: 12.08.85 US 764359

(43) Date of publication of application:
15.04.87 Bulletin 87/16

(84) Designated Contracting States:
DE FR GB

(71) Applicant: FORD MOTOR COMPANY LIMITED
Eagle Way
Brentwood Essex CM13 3BW(GB) GB
Applicant: FORD-WERKE
AKTIENGESELLSCHAFT
Ottoplatz 2 Postfach 21 03 69
D-5000 Köln 21(DE) DE
Applicant: FORD FRANCE SOCIETE ANONYME
344 Avenue Napoléon Bonaparte B.P. 307
F-92506 Rueil Malmaison Cedex(FR) FR

(72) Inventor: Morris, Christopher John
328 Fairhills Drive
Ypsilanti Michigan 48197(US)
Inventor: Robertson, Richard Earl
15159 Reo Avenue
Allen Park Michigan 48101(US)

(74) Representative: Messulam, Alec Moses et al
A. Messulam & Co. 24 Broadway
Leigh on Sea Essex SS9 1BN(GB)

(54) Transverse leaf spring suspension.

(57) A suspension system for a vehicle includes a transverse leaf spring (2) mounted to the chassis (4) of the vehicle, a wheel carrier (6) attached to one end of the spring (2), a telescoping strut (12) mounted to the wheel carrier (6) at its lower end and to the chassis (4) at its upper end and a generally longitudinal link (22) interposed between said wheel carrier (6) and said chassis (4).

FIG. 1.

# TRANSVERSE LEAF SPRING SUSPENSION

The present invention relates to a transverse leaf spring suspension for a vehicle.

Leaf spring suspensions have long found favor with vehicle designers. One of the most commonly employed lead spring configurations is the semi-elliptic arrangement. Suspensions using semi-elliptic springs are disclosed in U.S. patents 261,937; 355,341; 381,309; and 1,334,700.

Designers seeking to improve the performance of elliptic springs have devised a multitude of alternative spring configurations. German Patentschrift 452,883 discloses a laminated leaf spring having multiple elliptical sections. British patent 421,735 discloses a laminated elliptical leaf spring having a series of almost sinusoidal waves formed therein. French patents 35,211 and 653,291 disclose laminated leaf springs having multiple camber designs.

Australian patent 204,874 discloses a laminated leaf spring with a multiple camber design.

A transverse leaf spring suspension is disclosed in U.S. patent 509,069 in which a transverse leaf spring is attached to the ends of a beam-type axle immediately inboard of the wheel spindles. U.S. patent 718,303 discloses the use of a transverse leaf spring to suspend the body of a motor vehicle. Neither of these suspension systems dispense with the weight of the separate axle beam by utilizing the spring as a control arm.

U.S. patent 2,093,822 discloses the use of a transverse leaf spring in conjunction with a helical compression spring in both swing arm and parallel arm independent suspensions. U.S. patent 2,138,136 discloses the use of a transverse leaf spring in conjunction with a beam-type steerable axle for a motor vehicle. U.S. patent 4,458,918 discloses a transverse leaf spring suspension in which a MacPherson strut is combined with transversely extending front and rear control arms. Each of these suspension systems includes one or more separate control arms which increase the unsprung weight and complexity of the systems.

A transverse leaf spring combining the function of a control arm and a spring element is shown in U.S. patent 2,697,613 in which a transverse leaf spring is combined with a wheel carrier and a transverse upper control arm. A similar but more complicated design is disclosed in U.S. patent 2,045,210 in which both leaf and coil springs are used. This design as well as the design in the '613 patent both suffer from the absence of a link capable of controlling wheel toe during braking, acceleration, and cornering. Further, each system includes an upper control arm which will of course increase the unsprung weight and complexity of the system.

The monoleaf suspension disclosed in U.S. patent 2,654,597 includes a spring having the configuration of a rhombus in plan view. The rhomboid-shape spring is alleged to accommodate driving and braking forces occurring on the wheels. This spring would necessarily have significant physical dimensions and weight in order to accommodate such forces in the absence of a longitudinally directed link. This system also includes a separate upper control arm. The drawbacks of such a system in terms of excess weight and complexity need not be further enumerated.

It is an object of the present invention to provide an independent wheel suspension with a transverse leaf spring which is simple to manufacture and which has relatively few parts.

It is another object of the present invention to provide an independent transverse leaf spring suspension which minimuzes the effects of braking and driving forces upon the road wheels.

It is yet another object of the present invention to provide an independent transverse leaf spring suspension which operates with minimum changes in track width.

It is yet another object of the present invention to provide an independent transverse leaf spring suspension which employs a telescoping strut and is relatively simple to fabricate and light in weight.

According to the invention there is provided a suspension system for a vehicle comprising a transverse leaf spring mounted to the chassis of said vehicle, a wheel carrier attached to one end of said spring, a telescoping strut attached to said wheel carrier at its lower end and to said chassis at its upper end and a generally longitudinal link interposed between said wheel carrier and said chassis.

In a preferred embodiment, the leaf spring is of monoleaf construction and may be configured in a double-camber design so as to cause the track width of the suspension to remain substantially unchanged during jounce and rebound movement. The suspension system of the present invention preferably includes the well-known MacPherson strut construction in which the telescoping strut is rigidly attached to the wheel carrier. An example of a suspension using a modified MacPherson strut design is shown in the Ford Motor Company Shop Manual for 1985 Model Escort/Lynx vehicles, at page 14-35-2.

The invention will now be further described by way of example with reference to the accompanying drawings in which:

Figure 1 is a perspective view of a transverse leaf spring suspension according to the present invention;

Figure 2 showns the motion path of a single camber leaf spring suitable for use with the present invention;

Figure 3 shows the motion path of a double camber leaf spring suitable for use with the suspension of the present invention; and

Figure 4 is a fragmented perspective view of the suspension of the present invention looking forward at the rear axle of a front drive vehicle.

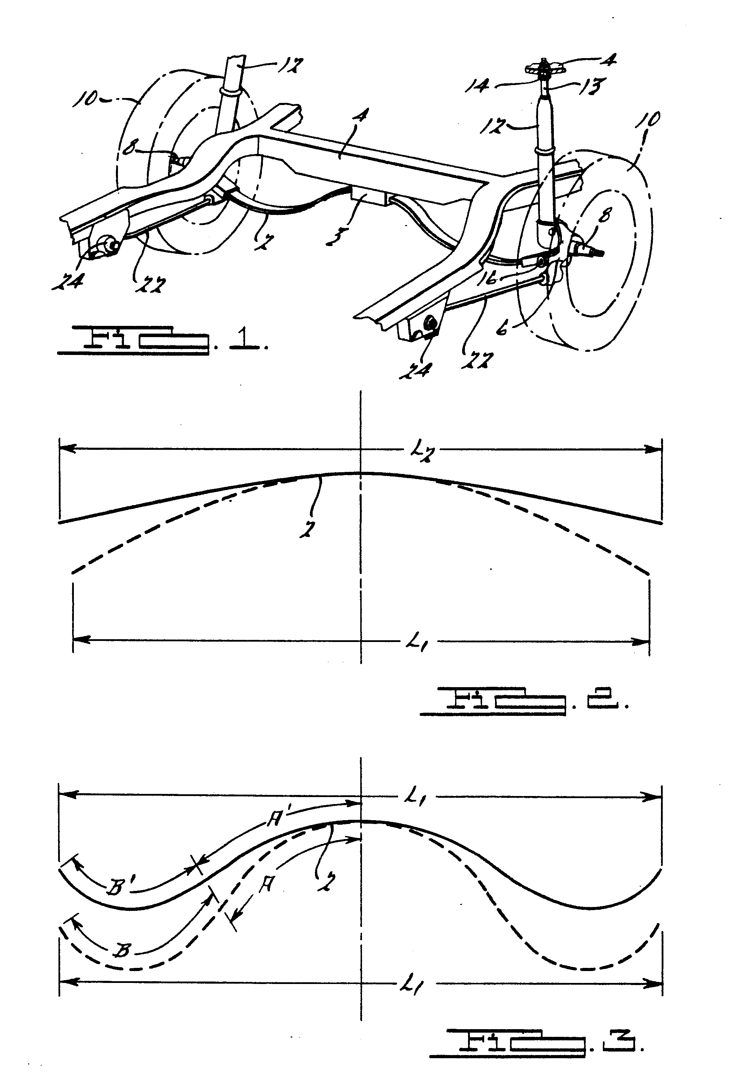

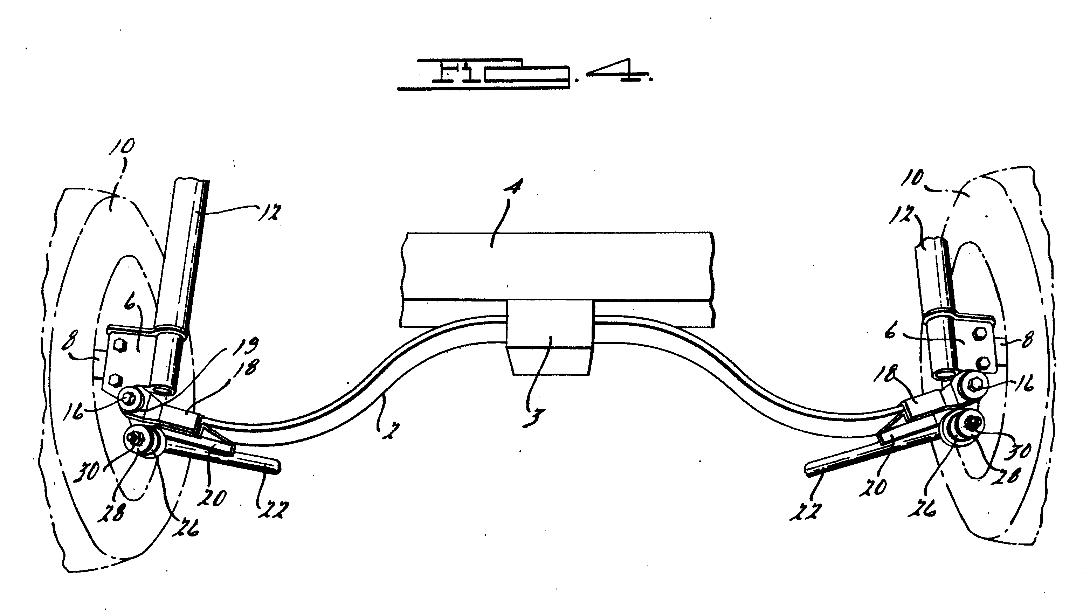

As shown in Figures 1 and 4, the suspension system of the present invention includes transverse leaf spring 2 mounted to chassis 4 of a vechicle, a wheel carrier 6 attached to either end of spring 2, telescoping struts 12 attached to wheel carriers 6 at the lower ends of the struts and to chassis 4 at their upper ends, and generally longitudinal links 22 interposed between the wheel carriers and the chassis. Because the suspension of the present invention is symmetrical about the longitudinal center line of the vehicle, further reference will be made to only half of the suspension, it being understood that the construction of each side is identical. Spring 2 is attached to chassis 4 at its longitudinal midpoint by clamp assembly 3. The outboard end of the spring leaf is clamped between upper spring bracket 18 and lower spring bracket 20. The spring brackets may be attached to the spring leaf by means of fasteners extending through each bracket and through the spring leaf as well as by bonding to the spring leaf or by any other method known to those skilled in the art. Upper spring bracket 18 is provided with mounting lugs 19 having suitable apertures for passage of pivot bolt 16, which attaches the upper spring bracket to wheel carrier 6.

Wheel carrier 6 includes spindle 8 upon which wheel and tire assembly 10 is rotatably mounted. The lower end of telescoping strut 12 is rigidly mounted to wheel carrier 6. The upper end of telescoping strut 12 is pivotably mounted to chassis 4 by means of elastomeric isolator 14 through which piston rod 13 extends.

In the event telescoping strut 12 is provided with viscous damping capability, the suspension thus described will be a modified MacPherson strut design. Those skilled in the art will appreciate, however, that other arrangements of telescoping struts and shock absorbers could be used in which the strut provides no damping force but merely serves to guide the wheel in jounce and rebound movement.

The suspension of the present invention also includes longitudinal tension link 22 which serves to control the toe angle of the wheel. Link 22 prevents the wheel and tire assembly from toeing out or toeing in excessively during braking or acceleration of the vehicle. Link 22 runs generally longitudinally, i.e., generally parallel to the longitudinal centerline of the vehicle. The leading end of longitudinal link 22 is attached to the chassis by pivot 24. The trailing end of the link is resiliently mounted to wheel carrier 6 by means of isolator 26, washer 28 and nut 30. During jounce and rebound movement of the wheel and tire and wheel carrier, longitudinal link 22 will rotate about pivot 24. During braking or acceleration, or if the wheel and tire assembly strikes an obstruction in the roadway, however, link 22 will prevent the wheel and tire assembly from recessing excessively or moving forward excessively.

Figures 2 and 3 show two configurations suitable for the leaf spring of the present invention. Each configuration is that of a monoleaf or single leaf construction. Although the spring is preferably constructed of a fiber reinforced plastic material using such fibers as glass or carbon, those skilled in the art will appreciate that the spring could be constructed of various materials including non-metallic and metallic composites.

Figure 2 illustrates the motion path of a leaf spring having a single camber design. Although this configuration produces acceptable performance, stability of the vehicle may be somewhat degraded because as shown in Figure 2, flexing of the spring is accompanied by change in its overall length. Figure 2 shows that as spring 2 straightens under load, its overall length will increase from length $L_1$ to length $L_2$. This change will have the undesirable effect of altering the track width of the suspension as the suspension moves through jounce and rebound. The outwardly directed thrust of the wheel and tire assembly associated with the track width change will cause a lateral impact to the vehicle which is sometimes perceptible by the passengers. This problem is obviated by the double camber design shown in Figure 3.

As shown by Figure 3, the motion path of the double camber spring is such that it will allow the suspension to move from full jounce to full rebound at substantially constant track width. Without wishing to be bound by the following explanation of the theory behind this phenomenon, applicants are able to state that the overall length of the spring remains constant because, as shown in Figure 3, the increase in the overall length of the spring attributable to segment A upon flexure of the spring is compensated for and matched by the decrease in overall length due to segment B. Because the respective decreases and increases in overall length of sections A and B cancel each other, the track width of the suspension will remain constant when the suspension moves from jounce to rebound. Undesirable force imputs associated with track width changes will therefore be eliminated. It should be understood in view of this disclosure, however, that the monoleaf multiple camber configuration described herein could be used to yield a finite, controlled amount of change in the overall length of the spring so as to produce a wheel camber angle change, should a particular vehicle design require such an operating characteristic. It should further be understood in view of this disclosure that multiple camber springs with double, triple or quadruple or other designs could be employed according to the present invention.

The suspension system of the present invention offers a light weight, economical, simplified construction readily lending itself to high volume production. Because the transverse spring functions as a control arm as well as a spring, the need for a separate lower control is obviated. The MacPherson strut eliminates the need for an upper control arm, thereby further promoting the economy and light weight of this suspension.

As used herein, the term "chassis" means either a conventional vehicle construction having a separate frame and body or a conventional unitized frame and body vehicle construction.

## Claims

1. A suspension system for a vehicle comprising a transverse leaf spring (2) mounted to the chassis (4) of said vehicle, a wheel carrier (6) attached to one end of said spring (2), a telescoping strut (12) attached to said wheel carrier (6) at its lower end and to said chassis (14) at its upper end and a generally longitudinal link (22) interposed between said wheel carrier (6) and said chassis (4).

2. A suspension system according to Claim 1, wherein said spring is mounted to said chassis at the longitudinal midpoint of said spring.

3. A suspension system according to Claim 1 or 2, wherein said spring is pivotably attached to said wheel carrier.

4. A suspension system according to any one of Claims 1 to 3, wherein said link interposed between said wheel carrier and said chassis is attached to said chassis at a point forward of said wheel carrier.

5. A suspension system according to any one of the preceding claims, wherein said spring is of monoleaf construction.

6. A suspension system according to Claim 5, wherein said spring has at least one camber configuration.

7. A suspension system according to Claim 5 or 6, wherein said spring is configured such that the track width of said suspension system will remain substantially unchanged during jounce and rebound movement of the suspension.

8. A suspension system according to any one of the preceding claims, wherein said telescoping strut is ridigly attached to said wheel carrier and is pivotally attached to said chassis.

9. A suspension system according to Claim 1, wherein said spring is of a monoleaf multiple camber configuration yielding a finite, controlled amount of change in said spring's overall length during jounce and rebound movement of the suspension, whereby the camber angle of the vehicle's wheel will be controllably changed.

10. A suspension system according to any one of the preceding claims, where said link is pivotably attached to said chassis.

FIG. 1.

FIG. 2.

FIG. 3.

FIG. 4.

0 218 322

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 927 486 (DAIMLER-BENZ) <br> * claim 1; figures 1, 3 * | 1-6,8, 10 | B 60 G 3/28 |
| A | | 9 | |
| P,X | WO-A-8 600 854 (GKN TECHNOLOGY) <br> * abstract; figures 1-3 * | 1,4,5, 8,10 | |
| A | DE-A-3 329 686 (VOLKSWAGEN) <br> * abstract; figures 1-3 * | 1-5,7, 10 | |
| A | US-A-3 913 932 (GUERRIERO et al.) <br> * abstract; figures 1, 2 * | 1,3,5 | **TECHNICAL FIELDS SEARCHED (Int. Cl.4)** |
| A | FR-A- 721 734 (DE GAIL) <br> * figures 1, 2 * | 1 | B 60 G 3/00 <br> B 60 G 11/00 <br> F 16 F 1/00 |
| A | US-A-1 609 946 (HILL) <br> * figure 2 * | 9 | |

The present search report has been drawn up for all claims

| Place of search | Date of completion of the search | Examiner |
|---|---|---|
| BERLIN | 15-11-1986 | KRIEGER P O |